# EUROPEAN PATENT SPECIFICATION

(11) **EP 3 198 154 B1**
(45) Date of publication and mention of the grant of the patent: **22.10.2025**
(21) Application number: 15772159.8
(22) Date of filing: 18.09.2015
(51) Int. Cl.: F16B 25/00

(54) **VARIABLE THREAD FASTENER**
BEFESTIGUNGSELEMENT MIT VARIABLEM GEWINDE
ÉLÉMENT DE FIXATION À FILETAGE VARIABLE

(30) Priority: 22.09.2014 US 201414493029
(43) Date of publication of application: 02.08.2017
(73) Proprietor: Simpson Strong-Tie Company, Inc., Pleasanton, CA 94588 (US)
(72) Inventor: PARK, Jeremy Scott, Pleasanton, California 94588 (US)
(74) Representative: Fuchs Patentanwälte Partnerschaft mbB
(86) International application number: PCT/US2015/050918
(87) International publication number: WO 2016/048822

(56) References cited:
- EP-A1- 0 012 441
- DE-A1- 4 439 535
- DE-U1- 8 329 783
- GB-A- 2 235 744
- US-A- 6 056 491
- US-A1- 2011 110 745
- US-A1- 2012 251 268
- US-B1- 6 332 741
- US-B1- 6 514 026

## Description

### BACKGROUND

Fastener designs have been used to improve specific characteristics of fasteners in different materials. Ultimately, the fastener needs to bind one material to another securely and efficiently. Screw-type fasteners generally include a threaded shank with a pointed tip at one end thereof and a head at the other end. The head has a recess for accepting a driver tip. Some heads are designed to be recessed in a fastened material, while others are designed to embed into the material so that the head is flush with a surface of the bound material. A prior art fastener is known from DE 83 29 783 U1.

### SUMMARY

Technology is described herein which provides a unique fastener. The fastener includes a shank having a blunt leading end at a first end and a head at a second end. A contiguous helical thread formed from the tip toward the second end with a first, symmetric thread angle extending from and beginning at the first end and extending toward the second end, and a second thread angle contiguous with the first thread angle. The first thread angle is greater than the second thread angle and the thread with the symmetric thread angle includes a serrated edge.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

*The scope of the invention is as set forth in the appended claims.*

### BRIEF DESCRIPTION OF THE DRAWINGS

Figure 1 is a perspective view of a first embodiment of a fastener in accordance with the present technology.
Figure 2 depicts a plan view of a first embodiment of a fastener in accordance with the present technology.
Figure 3 depicts an end view.
Figure 4 is a partial cut-away view along line C - C of Figure 3.
Figure 5 is a cross-section view along line B - B in Figure 1.
Figure 6 is a cross section view along line A - A in Figure 1.
Figure 7 is a perspective view of another embodiment of the fastener in accordance with the present technology.
Figure 8 depicts a plan view of a second embodiment of a fastener in accordance with the present technology.
Figure 9 is an end view of the fastener of Figure 7.
Figure 10 depicts a partial cut-away view along line E - E in Figure 9.
Figure 11 is a cross section view along line D - D in Figure 9.
Figure 12 depicts another embodiment of the fastener in accordance with the present technology.
Figure 13 depicts another embodiment of a fastener in accordance with the present technology.
Figure 14 depicts a plan view of a further embodiment of a fastener in accordance with the present technology.
Figure 15 depicts a plan view of a further embodiment of a fastener in accordance with the present technology.
Figure 16 depicts a partial cutaway view along section G - G of a further embodiment of a fastener in accordance with the present technology.
Figure 17 depicts a cross sectional view along line F - F of Figure 15.

### DETAILED DESCRIPTION

The technology described herein is a fastener having features allowing securing elements in wood, composite or other material and providing improved performance.

The technology includes a threaded fastener having a varied thread angle. A first portion of the thread is formed with a first thread angle and a second portion of the thread is formed with a second thread angle. In one embodiment, the first thread angle is greater than the second and is formed in the thread at the leading or tip end of the fastener.

In one embodiment, the fastener includes a shank having a blunt leading end at a first end and a head at a second end. A contiguous helical thread formed from the tip toward the second end with a first, symmetric thread angle extending from and beginning at the first end and extending toward the second end, and a second thread angle contiguous with the first thread angle. The first thread angle is greater than the second thread angle and the thread with the symmetric thread angle includes a serrated edge
In some embodiments, one or more knurls are provided in the shaft in the threaded or unthreaded regions of the fastener. The thread may be serrated or jagged over one or more portions of the fastener, including the area of the first thread angle. Various embodiments of variable thread knurl fasteners are described herein. One embodiment of the fastener includes a shank having a first region with a generally cylindrical cross-section with a helical thread, followed by a thread-free shank section. The first section has a first portion with a first thread angle and a second portion with a second thread angle. In one embodiment, this is combined with a "type 17" screw point.

In one embodiment, one or more knurl sections and one or more thread angle changes may be provided in the fastener. In one embodiment, the pitch of the thread is constant. In one embodiment the thread extends over the entire shank and in another embodiment, the thread covers only a partial length of the shank. The cross-sections may be formed to a length approximately equal to the pitch of the helical thread.

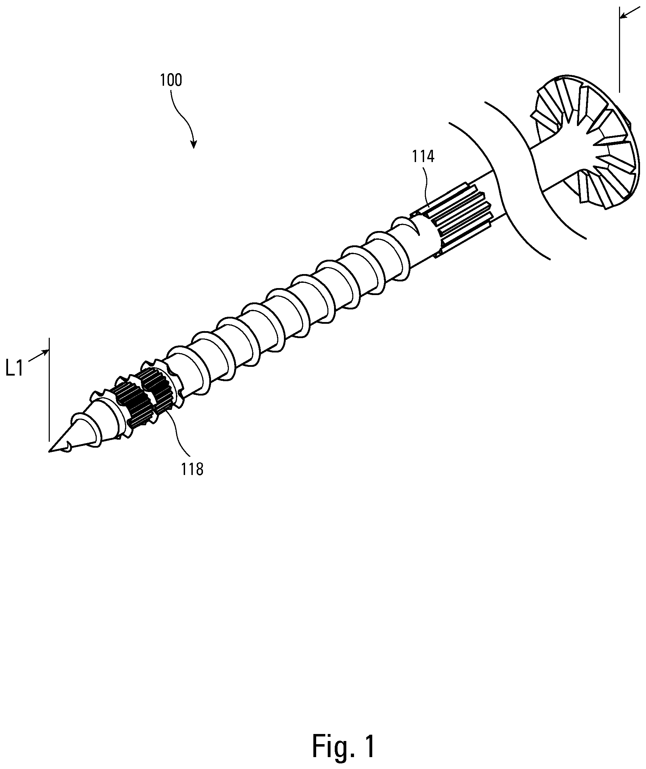

A first embodiment of the fastener technology will be described with respect to Figures 1 - 6.

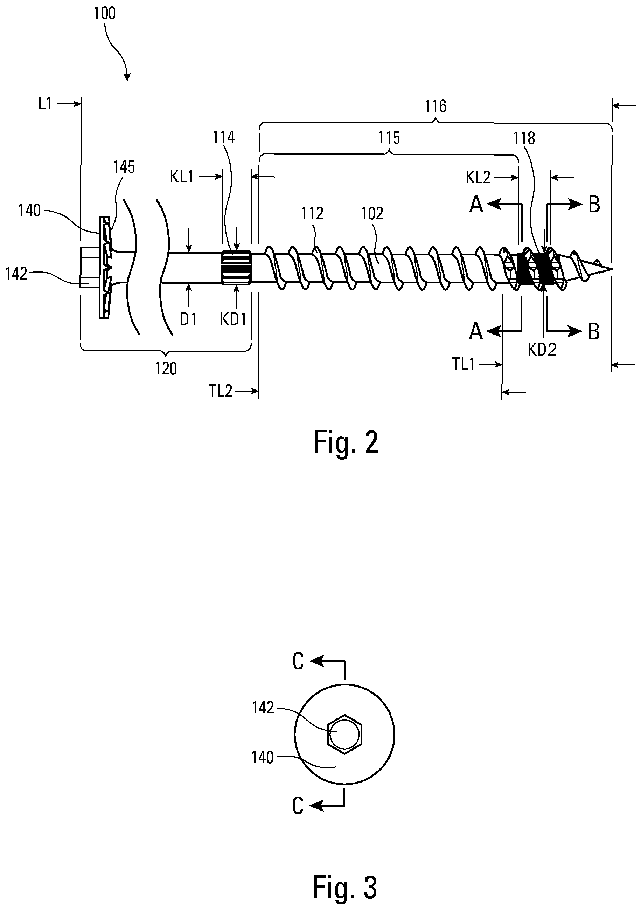

The fastener 100 of Figures 1 - 5 includes a shank 102 having a pointed tip 104 at one end thereof and a head 140 at another end. The shank may be formed of galvanized steel, though other materials may be used. The first section 116 extends from pointed tip 104 to second section 120. The body of the shank has a minor diameter D2 (Figure 3) in first section 116. The second section 120 has a diameter D1, which may be greater than or equal to D2.

The shank in region 120 has a cylindrical cross-section and in this embodiment comprises an unthreaded region.

Two knurls 114 and 118 are provided in the respective second region 120 and first region 116. Knurl 118 has a knurl diameter KD2 which is 1.1 - 1.3 times the minor diameter D2. Knurl 114 has diameter KD1 which may be the same as or different than diameter KD2. In one embodiment, KD1 has a diameter which is 1.1 - 1.3 times shank diameter D1 and which is the same as or greater than KD2 by a ratio of 1.0 - 1.2.

A first section 116 of the shank includes a helical thread 112 formed on the shank 102 extending to the tip 104. The shank in section 116 has a generally cylindrical shank diameter D2 and the thread has a diameter D3 which is approximately 1.5 - 1.75 times D2. The thread 112 has an effective thread height above the shank in the section 116 equivalent to ((D3-D2)/2) and a pitch P.

In the embodiment 100, two knurls (114, 118) are provided, but in other embodiments only one knurl is used. Where one knurl is used, the knurl may be in the threaded section (116) or the unthreaded section (120). The knurls may be the same or different sizes, as described above. Each knurl has a knurl length KL. Knurl 114 has a knurl length KL1 and knurl 118 has a knurl length KL2. KL1 and KL2 may be the same or different. In the embodiment of Figures 1 - 5 the length of KL1 to KL2 may vary over a ratio of KL1:KL2 of about 1.5 - 0.9.

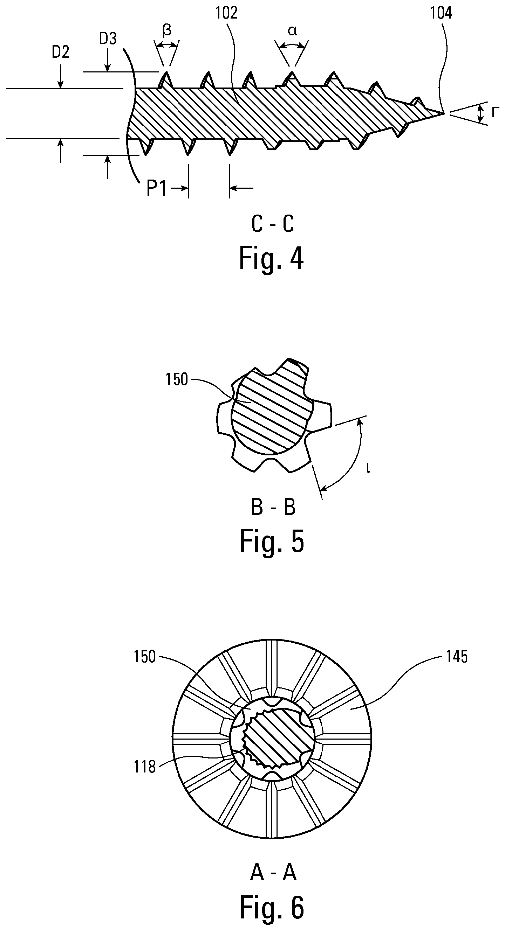

In one embodiment, thread 112 is divided into a first length (or region) TL1 and a second length (or region) TL2, with TL1 extending from point 104 toward second section 120. The thread in length TL1 includes a serrated edge defined by a plurality of teeth 150 illustrated in Figure 4. The Teeth may be formed by 90 degree gaps spaced at 60 degree intervals in thread 112. Other serration formations may be used. Length TL1 extends just beyond knurl 118 in section 116 of shaft 102.

In a further unique aspect of the technology, the thread has a variable thread angle along the length of section 116. A first potion of the thread in length TL1 has a thread angle α while a second portion of the thread has a thread angle β, where α is greater than β. In one embodiment, α is 55 - 65 degrees and β is 35 - 45 degrees. The thread angle β may be maintained through length TL2. In one embodiment TL2 is greater than TL1 by about 2.15-2.5 times.

In various embodiments, the total length L1 of the fastener may vary between 4-12 inches. In such embodiments, for any change in length L1, the length of section 116 remains constant, with a change in the length of section 120 extending the length of the fastener. In such embodiments, a length of section 116 may be about 3 inches and the position of knurl 118 remains adjacent to section 116 irrespective of the length of section 120. Alternatively, additional knurls may be provided in section 116 or section 120.

When constructed in accordance with the foregoing description, the torque required to install a fastener is greatly reduced. Table 1 is a comparison of three different fastener constructions: a standard thread (column C) with no serrations or knurls, a serrated thread (column A) and a thread/knurl/variable thread fastener constructed as in the present description of Figures 1 - 6. (column B) As illustrated therein the average torque required for comparable lengths of penetration into a wood surface was substantially less when both the serrated edge and knurls 114 and 118 were provided.

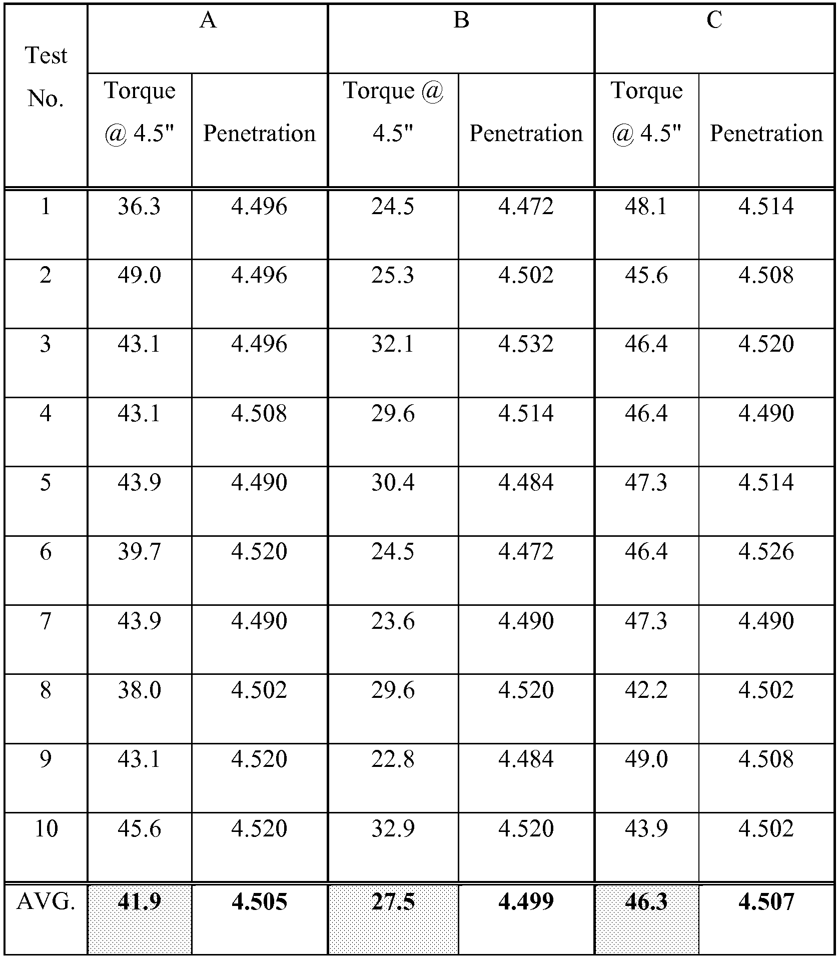

Head 140 may be any standard head, but in the embodiment of Figures 1 - 6, a hex nut head fastened to a disk 145. The underside of the disk 145 may include nibs which help the disk engage a surface of the product being fastened. In one embodiment, twelve (12) locking teeth or nibs are formed in the bottom surface of the disk.

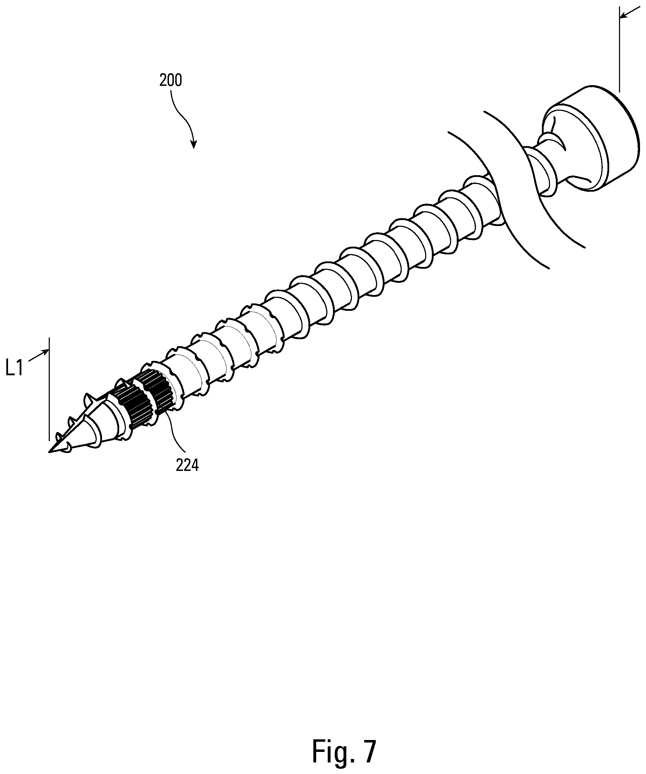

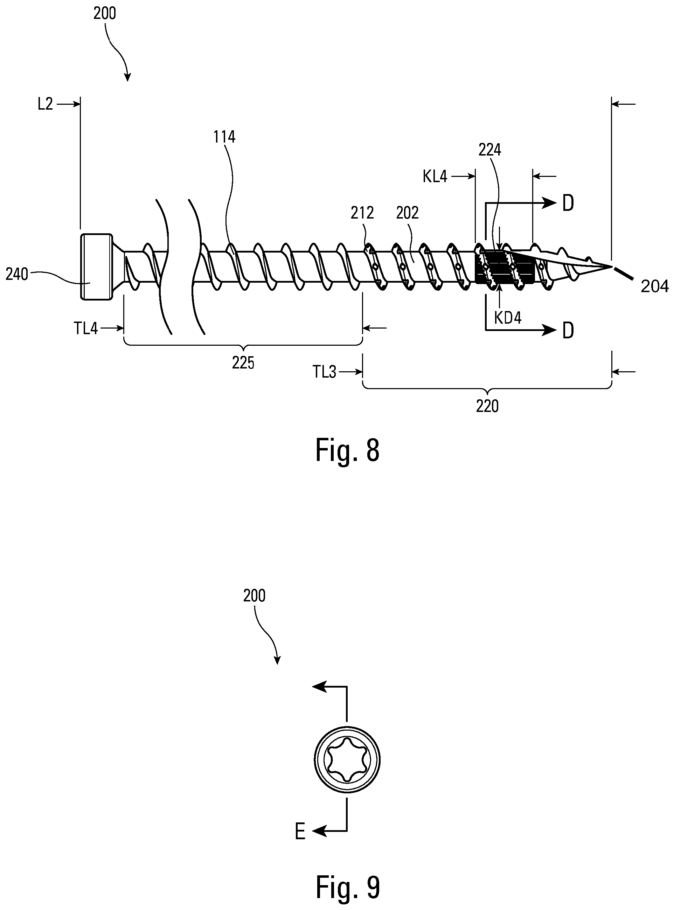

Figures 7 - 11 illustrate an alternative embodiment of the technology. The fastener is similar to that of Figures 1 - 6 except that the thread runs the entire length of the shaft, the portion of the wider thread region extending from the tip is longer, the serrated section is longer and the fastener includes a "type 17" point. It should be recognized that a type 17 point may be utilized with the embodiment of Figures 1 - 6.

In the embodiment of Figures 7 - 11, a fastener 200 has a total length L2, includes a shank 202 having a first portion 220 and a second portion 225. The first portion includes a tip 204, a serrated portion of thread 212, a thread portion having a thread angle 8 which is larger than a thread angle Σ. Region 220 has a total length TL3 is less than the length TL4 of region 225 by about 3.5 - 3.8 times. In one embodiment, Θ is 55 - 65 degrees and Σ is 30 - 45 degrees.

The shank 202 has a generally cylindrical shank diameter D4 and the thread has a diameter D5 which is approximately 1.4 - 1.6 times D4. The thread 212 has an effective thread height above the shank equivalent to ((D5-D4)/2) and a pitch P4.

One knurl 224 is provided in the first region 220. Knurl 224 has a knurl diameter KD4 which is 1.002 - 1.25 times the minor diameter D4. Knurl 224 has a length KL4 which in the embodiment of Figures 6 - 9 is equivalent to two times P4. The knurl length may be shorter or longer.

Helical thread 212 formed on the shank 202 extends from the tip 204 to head 240. In the embodiment, one knurl is provided, but in other embodiments multiple knurls are used. Where one knurl is used, the knurl may be in the threaded section 220 with thread angle Θ, and may be positioned just after the tip reaches diameter D4 in the threaded section (220). If multiple knurls are used, the knurls may be the same or different sizes, as illustrated above.

In one embodiment, thread 212 is divided into a first section 220 of length TL3 and a second section 225 of length TL4, with TL3 extending from point 204 toward second section 225. The thread in length TL3 includes a serrated edge defined by a plurality of teeth 250. The teeth may be formed by 90 degree gaps in thread 112 positioned at 60 degree intervals.

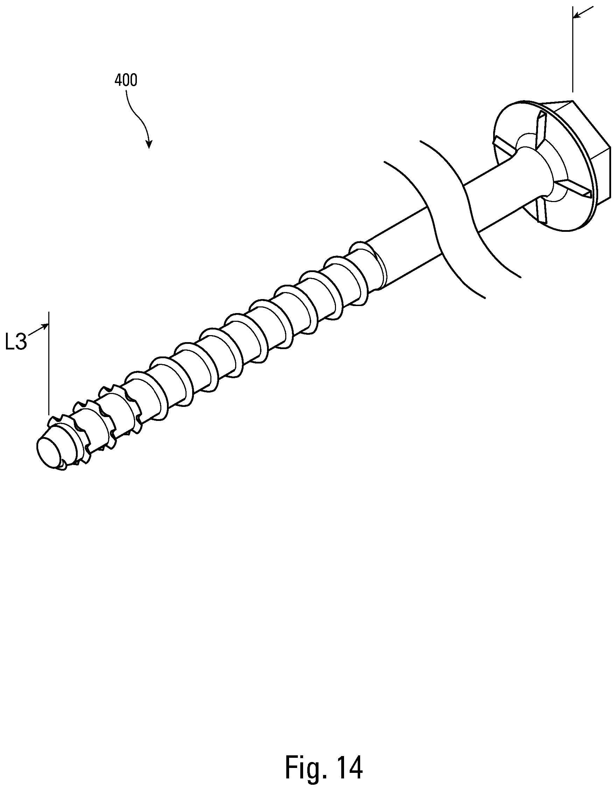

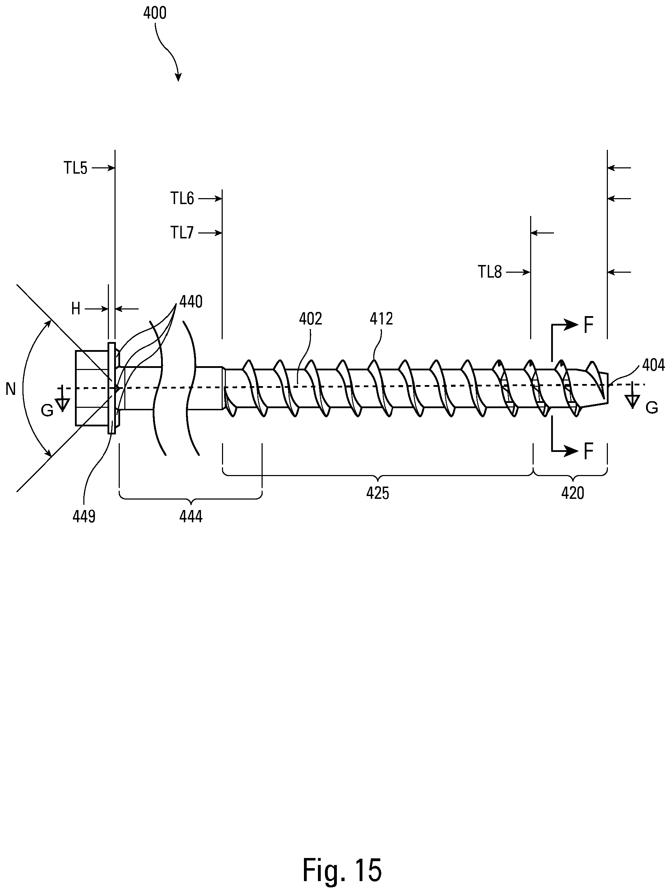

The screw is designed to be a self-boring screw into the material to be fastened. However, a pilot hole may be utilized. In the embodiment discussed with respect to Figures 14 - 17, a pilot hole is used as no boring tip is present.

A head 240 is provided at the other end of the shank 202. The head comprises hexalobular drive head, but may alternatively take the form of head 240 and/or have, a Phillips recess, a square or other shaped recess formed in the top of the head 240 to receive a driver.

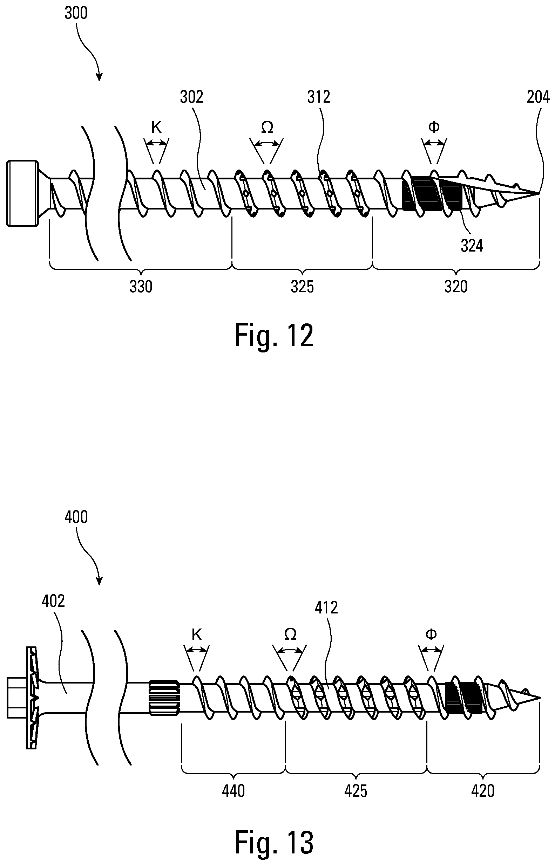

Figure 12 illustrates a third embodiment of a fastener 300 wherein a first and second thread angles are used in conjunction with one or more knurls and a serrated edge thread. In this embodiment the thread angle Φ extends for a first portion 320 of the thread, then the thread in portion 325 has a thread angle S2, and a third portion 330 of the thread has a thread angle K. In one embodiment, K and Φ are equal. In another embodiment, they are different. In one embodiment angle Φ is less than Ω and approximately equal to K. In one embodiment, Ω is 55 - 65 degrees and K and Φ are between 30 - 45 degrees.

The thread may extend the entire length of shank 302, or a portion thereof. While only one knurl is illustrated, multiple knurls may be used.

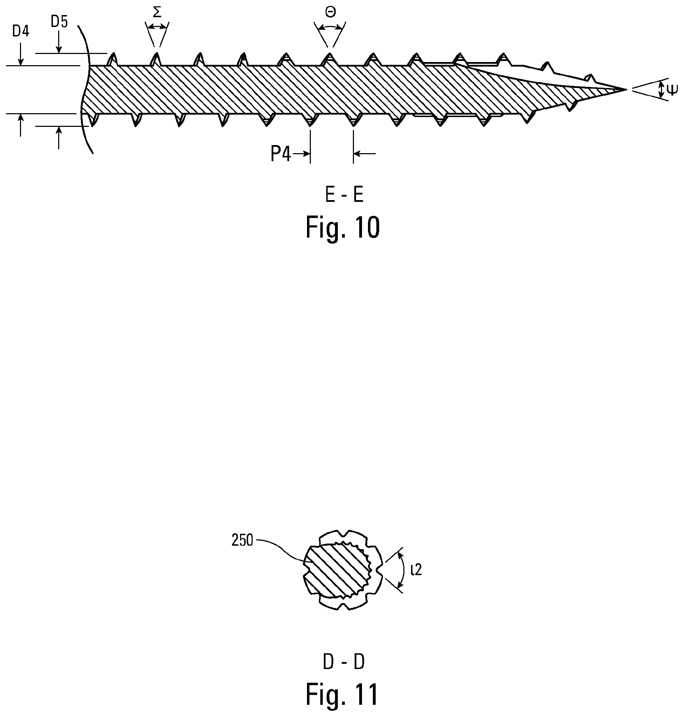

Figure 13 illustrates a fourth embodiment of fastener of the present technology. This embodiment is similar to the embodiment of Figure 10 except that the fastener 400 includes a thread-free section 450, and three thread portions having angles K, Ω and Φ are shown.

Figures 14 - 17 illustrate another alternative embodiment of the technology. The fastener included multiple thread angle regions in the thread and a flat point on one end.

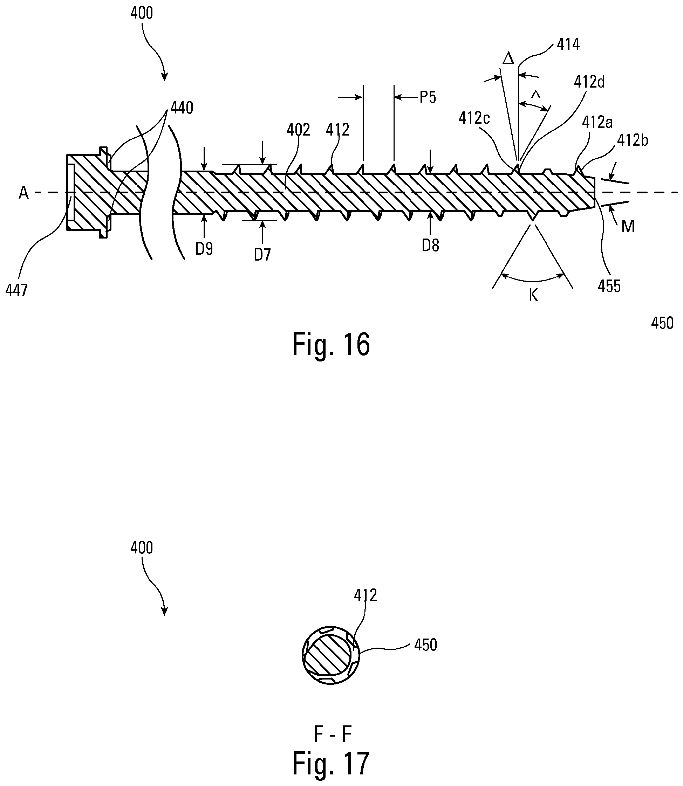

In the embodiment of Figures 14 - 17, a fastener 400 has a total length L3 (Figure 14), and includes a shank 402 having a length TL5 between a first end 404 and head 440. Helical thread 412 a first portion 420 and a second portion 425. The first portion runs from first end 404 and includes a serrated portion of thread 412 in region 420. As illustrated in Fig. 16, thread portion 420 has a symmetrical cross-section relative to the surface of shaft 402, with each flank 412a, 412b of the thread having the same length and forming an angle 1/2K with a surface of the shank 402. Second portion 425 of thread 412 is not serrated and is comprised of an asymmetric thread formed so the leading flank 412d is formed at a different angle than a trailing flank 412c. Lead flank 412d forms an angle Δ with line 414 perpendicular to an axis A formed by shank 402. Trailing flank 412c forms an angle A relative to a line 414 perpendicular to an axis A. Angle K may be in a range of about 55° - 65° and in one embodiment about 60°. Angle Δ may be in a range 7° - 13° degrees and in one embodiment is about 10°. Angle A may be in a range of 27° - 33° and in one embodiment is about 30°. As such, the portion of helical thread 412 in region 425 has a smaller cross-section (40° total, in one embodiment) than the cross-section of the thread in region 420.

The total length TL6 of the shank is about 4 to 6 times the length TL8 of region 420. Region 425 may be anywhere from 3 - 5 times as long as total length TL8 of region 420.

The shank 402 has a generally cylindrical shank diameter D9, a minor diameter D8 and a major diameter D7 defined by thread 412. The Major diameter D7 is approximately 1.3 - 1.5 times D8 and 1.25 - 1.4 times D9. The thread 412 has an effective thread height above the shank equivalent to ((D7-D8)/2) and a pitch P5. The pitch P5 is about 0.5 to 0.6 of the major diameter D7.

Helical thread 412 formed on the shank 402 extends from the first end 404 to a thread-free region 444. In one embodiment, the thread 412 in region 420 includes a serrated edge defined by a plurality of teeth 450. As illustrated in Figure 17, the serrated edge may be formed by five equally spaced teeth about at 360 Degree rotation of thread 412, with a tooth depth by 90 degree gaps in thread 412 positioned at 60 degree intervals. The teeth may be formed by forming gaps approximately two-thirds of the depth of the thread height with a 120° - 135° entry and exit angle.

First end 404 includes a blunt leading end defined by the first end 404 of the shank and surface 455. First end 404 is formed into a leading edge by an angling of the shank in region 420 as defined by angle M and terminating in surface 455. Angle M may be in a range of 10° - 20°.

In the displayed embodiment of Figures 14 - 17, no knurls are provided, but in other embodiments one or more knurls are used. If multiple knurls are used, the knurls may be the same or different sizes, as illustrated above.

A head 440 is provided at the other end of the shank 402. The head comprises hexalobular drive head, but may alternatively have, a Phillips recess, a square or other shaped recess formed in the top of the head 240 to receive a driver. Head 440 may be provided with a plurality of nibs 447 on the underside of washer 449. Each rib formed of a 90 degree angle N and extending a distance H below the washer 449. In one embodiment, four nibs are provided 90 degrees apart on washer 449. More or fewer (or no) nibs may be provided in various embodiments.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A fastener (400; 100; 200; 300), comprising:
a shank (402) having a first end and a second end defining a length; and
a thread (412) provided on the shank, the thread including a first region (420) having a first symmetric thread angle (K) forming a symmetric cross-sectioned thread and a second region (425) with a second asymmetric thread angle (Δ, A), each thread angle formed by a leading flank (412b, 412d) and a trailing flank (412a, 412c) of the thread on the shank, at least a portion of the thread having said first thread angle having a serrated edge;
wherein the first end of the shank is adapted to enter a structure to be secured and the second end includes a head (447).

2. The fastener (400; 100; 200; 300) of claim 1 wherein the first end has a blunt end.

3. The fastener (400; 100; 200; 300) of claim 1 wherein each flank of the thread (412) in the first region (420) of the thread which has a symmetrical cross-section forms an equal angle with a surface of the shank (402).

4. The fastener (400; 100; 200; 300) of claim 3 wherein the second region (425) of the thread (412) has said leading flank (412d) formed at an angle (Δ) relative to normal to an axis defined by the shank (402) which is less than an angle (A) formed by the trailing flank (412c) relative to normal to an axis defined by the shank (402).

5. The fastener (400; 100; 200; 300) of claim 4 wherein the angle (A) of the trailing flank (412c) relative to the angle (Δ) of the leading flank (412d) is three times greater than the angle (Δ) of the leading flank (412d).

6. The fastener (400; 100; 200; 300) of claim 1 wherein the first region (420) begins at and extends from a blunt end towards the second end, and the shank length is four to six times a length of the first region (420).

7. The fastener (400; 100; 200; 300) of claim 6 wherein the thread (412) is contiguous between the first and the second regions (420, 425).

8. The fastener (400; 100; 200; 300) of claim 6 wherein the second region (425) is adjacent to the first region (420) and extends from the first region (420) to said second end, and said second region(425) has a length which is 3 - 5 times the length of the first region (420).

9. The fastener (400; 100; 200; 300) of claim 1 wherein the shank (402) further includes a threadless region adjacent to the second region (425) of the thread.

10. A fastener (100; 200; 300; 400), comprising:
a shank (402) having lead end at a first end and a head (440) at a second end;
a continuous helical thread (412) having a symmetric thread angle (K) in a first region (420) adjacent to the first end and an asymmetric thread angle (Δ, A) in a second region (425), each thread angle formed by a leading flank and a trailing flank of the thread on the shank (402), the first region thread having a first thread angle greater than a second thread angle (Δ, A) of the second region (425), at least a portion of the contiguous helical thread (412) including a serrated edge.

11. The fastener (100; 200; 300; 400) of claim 10 wherein the first end includes a lead end having a blunt end formed by a flat surface and an angled portion of the shank (402).

12. The fastener (100; 200; 300; 400) of claim 10 wherein the shank (402) further includes a threadless region adjacent to the second region (425) of the thread (412).

13. The fastener (100; 200; 300; 400) of claim 10 the shank (402) has a generally cylindrical shank diameter, a minor diameter in the first and second regions (420, 425) and a major diameter defined by thread, wherein the major diameter is approximately 1.3 - 1.5 times the minor diameter.

14. The fastener (100; 200; 300; 400) of claim 13 wherein the thread (412) has a pitch which is about 0.5 to 0.6 of the major diameter.

15. The fastener (100; 200; 300; 400) of claim 10 wherein the first thread angle (K) is 1.5 times the second thread angle (Δ, A).

16. The fastener (100; 200; 300; 400) of claim 15 wherein the second region (425) of the thread has said leading flank formed at an angle (Δ) relative to normal of an axis defined by the shank (402) which is less than an angle (A) formed by said trailing flank relative to normal of said axis.

## Patentansprüche

1. Befestigungselement (400; 100; 200; 300), umfassend:
einen Schaft (402) mit einem ersten Ende und einem zweiten Ende, die eine Länge definieren; und
ein Gewinde (412), das auf dem Schaft vorgesehen ist, wobei das Gewinde einen ersten Bereich (420) mit einem ersten symmetrischen Gewindewinkel (K), der ein symmetrisches Querschnittsgewinde bildet, und einen zweiten Bereich (425) mit einem zweiten asymmetrischen Gewindewinkel (Δ, Λ) umfasst, wobei jeder Gewindewinkel durch eine vordere Flanke (412b, 412d) und eine hintere Flanke (412a, 412c) des Gewindes auf dem Schaft gebildet wird, wobei mindestens ein Abschnitt des Gewindes mit dem ersten Gewindewinkel eine gezahnte Kante aufweist;
wobei das erste Ende des Schafts dazu ausgelegt ist, in eine zu sichernde Struktur einzudringen, und das zweite Ende einen Kopf (447) umfasst.

2. Befestigungselement (400; 100; 200; 300) nach Anspruch 1, wobei das erste Ende ein stumpfes Ende aufweist.

3. Befestigungselement (400; 100; 200; 300) nach Anspruch 1, wobei jede Flanke des Gewindes (412) im ersten Bereich (420) des Gewindes, der einen symmetrischen Querschnitt aufweist, einen gleichen Winkel mit einer Oberfläche des Schafts (402) ausbildet.

4. Befestigungselement (400; 100; 200; 300) nach Anspruch 3, wobei der zweite Bereich (425) des Gewindes (412) die vordere Flanke (412d) aufweist, die in einem Winkel (Δ) relativ zur Normalen einer durch den Schaft (402) definierten Achse ausgebildet ist, der kleiner ist als ein Winkel (Λ), der durch die hintere Flanke (412c) relativ zur Normalen einer durch den Schaft (402) definierten Achse ausgebildet ist.

5. Befestigungselement (400; 100; 200; 300) nach Anspruch 4, wobei der Winkel (Λ) der hinteren Flanke (412c) relativ zum Winkel (Δ) der vorderen Flanke (412d) dreimal größer ist als der Winkel (Δ) der vorderen Flanke (412d).

6. Befestigungselement (400; 100; 200; 300) nach Anspruch 1, wobei der erste Bereich (420) an einem stumpfen Ende beginnt und sich von diesem zum zweiten Ende erstreckt und die Schaftlänge das Vier- bis Sechsfache der Länge des ersten Bereichs (420) beträgt.

7. Befestigungselement (400; 100; 200; 300) nach Anspruch 6, wobei das Gewinde (412) zwischen dem ersten und dem zweiten Bereich (420, 425) zusammenhängend ist.

8. Befestigungselement (400; 100; 200; 300) nach Anspruch 6, wobei der zweite Bereich (425) an den ersten Bereich (420) angrenzt und sich vom ersten Bereich (420) bis zum zweiten Ende erstreckt, und wobei der zweite Bereich (425) eine Länge aufweist, die das Drei- bis Fünffache der Länge des ersten Bereichs (420) beträgt.

9. Befestigungselement (400; 100; 200; 300) nach Anspruch 1, wobei der Schaft (402) ferner einen gewindefreien Bereich umfasst, der an den zweiten Bereich (425) des Gewindes angrenzt.

10. Befestigungselement (100; 200; 300; 400), umfassend:
einen Schaft (402) mit einem Vorderende an einem ersten Ende und einem Kopf (440) an einem zweiten Ende;
ein kontinuierliches Schraubengewinde (412) mit einem symmetrischen Gewindewinkel (K) in einem ersten Bereich (420) angrenzend an das erste Ende und einem asymmetrischen Gewindewinkel (Δ, Λ) in einem zweiten Bereich (425), wobei jeder Gewindewinkel durch eine vordere Flanke und eine hintere Flanke des Gewindes auf dem Schaft (402) ausgebildet ist, wobei das Gewinde des ersten Bereichs einen ersten Gewindewinkel aufweist, der größer ist als ein zweiter Gewindewinkel (Δ, Λ) des zweiten Bereichs (425), wobei mindestens ein Abschnitt des zusammenhängenden Schraubgewindes (412) eine gezahnte Kante aufweist.

11. Befestigungselement (100; 200; 300; 400) nach Anspruch 10, wobei das erste Ende ein Vorderende mit einem stumpfen Ende umfasst, das durch eine flache Oberfläche und einen abgewinkelten Abschnitt des Schafts (402) ausgebildet ist.

12. Befestigungselement (100; 200; 300; 400) nach Anspruch 10, wobei der Schaft (402) ferner einen gewindefreien Bereich umfasst, der an den zweiten Bereich (425) des Gewindes (412) angrenzt.

13. Befestigungselement (100; 200; 300; 400) nach Anspruch 10, wobei der Schaft (402) einen im Allgemeinen zylindrischen Schaftdurchmesser, einen kleineren Durchmesser im ersten und zweiten Bereich (420, 425) und einen durch das Gewinde definierten größeren Durchmesser aufweist, wobei der größere Durchmesser etwa das 1,3- bis 1,5-Fache des kleineren Durchmessers beträgt.

14. Befestigungselement (100; 200; 300; 400) nach Anspruch 13, wobei das Gewinde (412) eine Steigung aufweist, die etwa 0,5 bis 0,6 des größeren Durchmessers beträgt.

15. Befestigungselement (100; 200; 300; 400) nach Anspruch 10, wobei der erste Gewindewinkel (K) das 1,5-Fache des zweiten Gewindewinkels (Δ, Λ) beträgt.

16. Befestigungselement (100; 200; 300; 400) nach Anspruch 15, wobei der zweite Bereich (425) des Gewindes die vordere Flanke in einem Winkel (Δ) relativ zur Normalen einer durch den Schaft (402) definierten Achse aufweist, der kleiner ist als der Winkel (Λ), den die hintere Flanke relativ zur Normalen dieser Achse bildet.

## Revendications

1. Elément de fixation (400 ; 100 ; 200 ; 300), comprenant :
une tige (402) ayant une première extrémité et une seconde extrémité définissant une longueur ; et
un filetage (412) prévu sur la tige, le filetage comprenant une première région (420) ayant un premier angle de filet symétrique (K) formant un filetage à section transversale symétrique et une seconde région (425) avec un second angle de filet asymétrique (Δ, A), chaque angle de filet étant formé par un flanc avant (412b, 412d) et un flanc arrière (412a, 412c) du filetage sur la tige, au moins une partie du filetage ayant ledit premier angle de filet ayant un bord dentelé ;
dans lequel la première extrémité de la tige est adaptée pour pénétrer dans une structure à fixer et la deuxième extrémité comprend une tête (447).

2. Elément de fixation (400 ; 100 ; 200 ; 300) selon la revendication 1, dans lequel la première extrémité présente une extrémité émoussée.

3. Elément de fixation (400 ; 100 ; 200 ; 300) selon la revendication 1, dans lequel chaque flanc du filetage (412) dans la première région (420) du filetage qui présente une section transversale symétrique forme un angle égal avec une surface de la tige (402).

4. Elément de fixation (400 ; 100 ; 200 ; 300) selon la revendication 3, dans lequel la deuxième région (425) du filetage (412) comporte ledit flanc avant (412d) formé selon un angle (Δ) par rapport à la normale à un axe défini par la tige (402) qui est inférieur à un angle (A) formé par le flanc arrière (412c) par rapport à la normale à un axe défini par la tige (402).

5. Elément de fixation (400 ; 100 ; 200 ; 300) selon la revendication 4, dans lequel l'angle (A) du flanc arrière (412c) par rapport à l'angle (Δ) du flanc avant (412d) est trois fois plus grand que l'angle (Δ) du flanc avant (412d).

6. Elément de fixation (400 ; 100 ; 200 ; 300) selon la revendication 1, dans lequel la première région (420) commence à une extrémité émoussée et s'étend depuis l'extrémité émoussée vers la deuxième extrémité, et la longueur de tige est quatre à six fois supérieure à une longueur de la première région (420).

7. Elément de fixation (400 ; 100 ; 200 ; 300) selon la revendication 6, dans lequel le filetage (412) est contigu entre les première et deuxième régions (420, 425).

8. Elément de fixation (400 ; 100 ; 200 ; 300) selon la revendication 6, dans lequel la deuxième région (425) est adjacente à la première région (420) et s'étend depuis la première région (420) jusqu'à ladite deuxième extrémité, et ladite deuxième région (425) a une longueur qui est 3 à 5 fois supérieure à la longueur de la première région (420).

9. Elément de fixation (400 ; 100 ; 200 ; 300) selon la revendication 1, dans lequel la tige (402) comprend en outre une région sans filetage adjacente à la deuxième région (425) du filetage.

10. Elément de fixation (100 ; 200 ; 300 ; 400), comprenant :
une tige (402) ayant une extrémité avant à une première extrémité et une tête (440) à une seconde extrémité ;
un filetage (412) hélicoïdal continu ayant un angle de filet symétrique (K) dans une première région (420) adjacente à la première extrémité et un angle de filet asymétrique (Δ, A) dans une deuxième région (425), chaque angle de filet étant formé par un flanc avant et un flanc arrière du filetage sur la tige (402), le filetage de première région ayant un premier angle de filet supérieur à un deuxième angle de filet (Δ, A) de la deuxième région (425), au moins une partie du filetage (412) hélicoïdal contigu comprenant un bord dentelé.

11. Elément de fixation (100 ; 200 ; 300 ; 400) selon la revendication 10, dans lequel la première extrémité comprend une extrémité avant présentant une extrémité émoussée formée par une surface plane et une partie inclinée de la tige (402).

12. Elément de fixation (100 ; 200 ; 300 ; 400) selon la revendication 10, dans lequel la tige (402) comprend en outre une région sans filetage adjacente à la deuxième région (425) du filetage (412).

13. Elément de fixation (100 ; 200 ; 300 ; 400) selon la revendication 10, la tige (402) a un diamètre de tige généralement cylindrique, un diamètre mineur dans les première et deuxième régions (420, 425) et un diamètre majeur défini par le filetage, dans lequel le diamètre majeur est environ 1,3 à 1,5 fois le diamètre mineur.

14. Elément de fixation (100 ; 200 ; 300 ; 400) selon la revendication 13, dans lequel le filetage (412) a un pas qui est environ 0,5 à 0,6 du diamètre majeur.

15. Elément de fixation (100 ; 200 ; 300 ; 400) selon la revendication 10, dans lequel le premier angle de filet (K) est égal à 1,5 fois le deuxième angle de filet (Δ, A).

16. Elément de fixation (100 ; 200 ; 300 ; 400) selon la revendication 15, dans lequel la deuxième région (425) du filetage comporte ledit flanc avant formé selon un angle (Δ) par rapport à la normale d'un axe défini par la tige (402) qui est inférieur à un angle (A) formé par ledit flanc arrière par rapport à la normale dudit axe.
